(19) **Europäisches Patentamt / European Patent Office / Office européen des brevets**

(11) **EP 4 625 236 A1**

(12) **EUROPEAN PATENT APPLICATION**
published in accordance with Art. 153(4) EPC

(43) Date of publication:
01.10.2025   Bulletin 2025/40

(21) Application number: 22966321.6

(22) Date of filing: 01.12.2022

(51) International Patent Classification (IPC):
$G06F\ 30/23$ (2020.01)     $G06F\ 30/18$ (2020.01)
$G06F\ 113/14$ (2020.01)     $G06F\ 119/14$ (2020.01)

(52) Cooperative Patent Classification (CPC):
G06F 3/00; G06F 30/23; G06F 2113/14;
G06F 2119/14; Y02T 90/00

(86) International application number:
PCT/CN2022/135729

(87) International publication number:
WO 2024/108636 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  23.11.2022  CN 202211470861

(71) Applicant: China Nuclear Power Engineering Co.,
Ltd.
Beijing 100840 (CN)

(72) Inventors:
• LIU, Shubin
  Beijing 100840 (CN)

• LIU, Shihua
  Beijing 100840 (CN)
• LIU, Baojun
  Beijing 100840 (CN)
• CHEN, Li
  Beijing 100840 (CN)
• LIU, Jian
  Beijing 100840 (CN)
• BAI, Guoyu
  Beijing 100840 (CN)

(74) Representative: Cohausz & Florack
Patent- & Rechtsanwälte
Partnerschaftsgesellschaft mbB
Bleichstraße 14
40211 Düsseldorf (DE)

(54) **MECHANICAL CALCULATION METHOD AND APPARATUS FOR PIPELINE, AND ANALYSIS METHOD AND APPARATUS**

(57)     The present disclosure provides a mechanics calculation method and apparatus for a pipeline. The method comprises: generating, according to parameter information of all components in a pipeline to be calculated, a pipe-beam model formed by connecting a plurality of pipe-beam elements; acquiring a start node and an end node and meshing information of a target shell component requiring detailed analysis; generating a target shell component mesh model formed by joining a plurality of shell elements; replacing, with the target shell component mesh model, a pipe-beam element at a corresponding position in the pipe-beam model to form a hybrid model; performing finite element calculation on the hybrid model to obtain a displacement of each node of the hybrid model; calculating nodal internal forces of the pipe-beam elements based on nodal displacements of the pipe-beam elements; calculating stresses of the respective shell elements based on mesh nodal displacements of the target shell component mesh model; and calculating stresses of the pipe-beam elements based on the nodal internal forces of the pipe-beam elements. The method enables calculation and assessment of a pipeline and shell components to be accomplished in one pass, thereby greatly improving the wording efficiency and accuracy of pipeline design.

EP 4 625 236 A1

Start

Process as a conventional pipeline problem,
in which the pipe linear density and particular pipe
components need to be processed as shell element
components

Acquire start and end nodes (all are master
nodes) of a particular pipe component
Delete this pipe-beam element

Discretize the particular pipe component into shell elements
(generate node coordinates and element mesh)
Determine master node and slave nodes at ends of the model

Calculate the shell element _material density_ from pipe linear weight
$w'' = w' \times fac$, where $fac = PI/N/SIN(PI/N)$

Generate input problem data of one wording condition
for finite element calculation
Initiate the calculation

Is this a temperature
working condition?

Calculate the slave node displacement
from the master node displacement

Calculate the slave node displacement from the
master node displacement considering the
thermal expansion displacement of the slave
nodes caused by temperature

Calculate the pipeline internal force and the shell element stress
Assess the pipeline stress according to pipeline specification
Assess the shell element stress according to device specification

Calculate all wording
conditions in the problem

Finish

FIG. 1

**Description**

CROSS-REFERENCE TO RELATED APPLICATIONS

The present disclosure claims priority of Chinese patent application No. CN202211470861.7, filed on November 23, 2022, and entitled "Mechanics Calculation Method and Device for Pipeline", the entire contents of which are incorporated herein by reference.

TECHNICAL FIELD

The present disclosure relates to the technical field of pipeline design, in particular to a mechanics calculation method, a mechanics calculation apparatus, a mechanics analysis method, and a mechanics analysis apparatus for pipeline.

BACKGROUND

The existing types of pipeline calculation software all adopt one-dimensional pipe-beam elements for model calculation, including straight pipe-beam elements and curved pipe-beam elements, which are all linear elements. The pipeline calculation and device calculation are generally performed separately, that is, the pipeline calculation is performed first to obtain the pushing force exerted by the pipeline on the device, then load combination calculation is performed, and then stress analysis calculation and assessment of the device are performed using the combined load. Although there are programs that can use shell elements to perform calculation for special components, the methods for building the shell element component are relatively complicated, some require the node coordinates to be input node by node before a detailed description of each shell element is made. Some methods require a shell element model to be created by using an independent modeling module, and then a main program builds this shell element component into a stiffness matrix, and incorporates the stiffness matrix into a pipeline model for calculation. In the calculation result, only displacements and internal forces of the connecting points at both ends can be obtained for the shell element model. Once the pipeline solution is obtained, the force on the component is added to the device and a separate calculation is performed for the shell element component. It can be seen that the main technical problem of the existing pipeline calculation software is that it cannot create the shell element component with convenience.

The method of placing a shell element component model directly into a "pipeline problem" is in principle workable and can be accomplished by general-purpose finite element programs at present. However, the issue lies in the extremely low work efficiency, which includes: modeling efficiency, technical methods for connecting the pipeline to the shell component, specification processing requirements during the process, and the implementation of specification requirements during the assessment, which are the reasons why the general-purpose finite element software cannot meet the requirements of engineering design, calculation, analysis and application. The techniques involved herein include: user interaction (or called pipeline description method definition); pipeline program calculation, including the correspondence between standard-limited support requirements, calculation methods for specification requirements and pipeline loads; modeling methods for pipeline components (e.g. a tee-junction); and the correspondence relationship between pipeline elements and shell elements, and the like.

SUMMARY

To overcome the above disadvantages in the existing technology, the present disclosure provides a mechanics calculation method and apparatus for pipeline, which can complete calculation and assessment of the pipeline and shell component in one pass, thereby greatly improving the working efficiency of pipeline design.

The technical solutions adopted for solving the technical problems of the present disclosure are as follows.

The present disclosure provides a mechanics calculation method for pipeline, including:

generating, according to parameter information of all components in a pipeline to be calculated, a pipe-beam model formed by connecting a plurality of pipe-beam elements, and node information of the respective pipe-beam elements, wherein the components correspond to the pipe-beam elements in a one-to-one manner;

acquiring start and end node information and meshing information of a target shell component requiring detailed analysis, and generating a target shell component mesh model (mesh model of the target shell component) formed by joining a plurality of shell elements, and mesh node information of the target shell component mesh model;

replacing, with the target shell component mesh model, a pipe-beam element at a corresponding position in the pipe-beam model to form a hybrid model;

performing, according to working condition information of the pipeline to be calculated and the parameter information of the respective components, finite element calculation on the hybrid model to obtain a displacement of each node of the hybrid model; calculating nodal internal forces of the pipe-beam elements based on nodal displacements of the pipe-beam elements; and calculating stresses of the respective shell elements based on mesh nodal displacements of the target shell component mesh model; and

calculating stresses of the pipe-beam elements based on the nodal internal forces of the pipe-beam elements.

Optionally, before performing, according to the working condition information of the pipeline to be calculated and the parameter information of the respective components, finite element calculation on the hybrid model, the method includes:

acquiring the working condition information of the pipeline to be calculated and the parameter information of the respective components, which includes: determining a material density of the target shell component according to a linear density of the target shell component; and replacing the linear density in the parameter information of the target shell component with the material density of the target shell component, so as to form updated parameter information of the target shell component.

Optionally, determining the material density of the target shell component according to the linear density of the target shell component specifically includes:

determining a raw material density w' of the target shell component according to a linear density w of the target shell component by a formula: w' = w/g/t, wherein the target shell component is divided in a circumferential direction such that an end face circle of the target shell component forms N segments of circular arcs, g is a length of each of the circular arcs, g = πD/N, t is a wall thickness of the target shell component, and D is a pipeline diameter of the target shell component;

calculating a circumferential equivalent density factor fac according to a number of segments of the target shell component divided in the circumferential direction and by a formula: fac = g/g', wherein g' is a length of a foldline corresponding to each of the circular arcs after the target shell component is divided in the circumferential direction, g' = 2D × sin (180/N); and

calculating a material density w" of the target shell component according to Formula (1):

$$w'' = w' \times fac \qquad (1).$$

Optionally, a node of a pipe-beam element at a connection between the target shell component mesh model and the pipe-beam element is set as a master node, and the respective nodes of the target shell component mesh model corresponding to the master node at the connection between the target shell component mesh model and the pipe-beam element are set as slave nodes,

performing finite element calculation on the hybrid model to obtain the displacement of each node of the hybrid model includes: calculating, at the connection between the target shell component mesh model and the pipe-beam element, only the displacement of the master node;

calculating the stresses of the respective shell elements based on the mesh nodal displacement of the target shell component mesh model specifically includes:

calculating the displacements of the respective slave nodes corresponding to the master node based on the displacement of the master node; wherein the displacements of the respective slave nodes and displacements of other mesh nodes of the target shell component mesh model obtained in the finite element calculation constitute the mesh nodal displacement of the target shell component mesh model; and

calculating the stresses of the respective shell elements based on the mesh nodal displacement of the target shell component mesh model.

Optionally, before calculating the displacements of the respective slave nodes corresponding to the master node based on the displacement of the master node, the method further includes: determining whether a working condition is a non-temperature working condition or a temperature working condition;

if the working condition is determined to be a non-temperature working condition, calculating the displacements of the respective slave nodes corresponding to the master node based on the displacement of the master node using Formula (2):

$$d' = d \times a \qquad (2)$$

wherein d is the displacement of the master node, d' is the displacements of the slave nodes corresponding to the master node, and a is a transformation matrix for transforming the displacement of the master node to the displacements of the slave nodes;

if the working condition is determined to be a temperature working condition, calculating the displacements of the respective slave nodes corresponding to the master node based on the displacement of the master node using Formula (3):

$$d' = d \times (a \times (1+ \text{alf}))  \qquad (3)$$

wherein alf is a thermal expansion coefficient of a pipeline material.

The present disclosure also provides a mechanics analysis method for pipeline, including:

performing calculation using the mechanics calculation method for pipeline described above to obtain the stresses of the respective shell elements and the stresses of the respective pipe-beam elements; and
performing stress assessment on the pipeline according to the stresses of the respective shell elements and the stresses of the respective pipe-beam elements.

The present disclosure also provides a mechanics calculation apparatus for pipeline, including:

a pipe-beam generation module configured to generate, according to parameter information of all components in a pipeline to be calculated, a pipe-beam model formed by connecting a plurality of pipe-beam elements, and node information of the respective pipe-beam elements, wherein the components correspond to the pipe-beam elements in a one-to-one manner;
a shell generation module configured to acquire start and end node information and meshing information of a target shell component requiring detailed analysis, and generate a target shell component mesh model formed by joining a plurality of shell elements, and mesh node information of the target shell component mesh model;
a replacement module configured to replace, with the target shell component mesh model, a pipe-beam element at a corresponding position in the pipe-beam model to form a hybrid model;
a finite element calculation module configured to perform, according to working condition information of the pipeline to be calculated and the parameter information of the respective components, finite element calculation on the hybrid model to obtain a displacement of each node of the hybrid model; calculate nodal internal forces of the pipe-beam elements based on nodal displacements of the pipe-beam elements, and calculate stresses of the respective shell elements based on mesh nodal displacements of the target shell element mesh model; and
a stress calculation module configured to calculate stresses of the pipe-beam elements based on the nodal internal forces of the pipe-beam elements.

Optionally, the mechanics calculation apparatus further includes: an interface module configured to receive the working condition information of the pipeline to be calculated and the parameter information of the respective components, and transmit the working condition information of the pipeline to be calculated and the parameter information of the respective components to the pipe-beam generation module and the finite element calculation module, and further configured to receive serial number information and the meshing information of the target shell component, and transmit the serial number information and the meshing information of the target shell component to the shell generation module.

Optionally, the mechanics calculation apparatus further includes a shell parameter formation module, the shell parameter module is electrically connected to the interface module, and is configured to determine a material density of the target shell component according to a linear density of the target shell component, and replace the linear density in the parameter information of the target shell component with the material density of the target shell component, so as to form updated parameter information of the target shell component.

Optionally, the shell parameter formation module includes a material density calculation module and a shell parameter update module. The material density calculation module is electrically connected to the interface module, and is configured to determine the material density of the target shell component according to the linear density of the target shell component, and the shell parameter update module is electrically connected to the material density calculation module, and is configured to replace the linear density in the parameter information of the target shell component with the material density of the target shell component, so as to form updated parameter information of the target shell component;

the material density calculation module determining the material density of the target shell component according to the linear density of the target shell component specifically includes:

determining a raw material density w' of the target shell component according to a linear density w of the target shell component, by a formula: w' = w/g/t, wherein the target shell component is divided in a circumferential direction such that an end face circle of the target shell component forms N segments of circular arcs, g is a length of each of the circular arcs, g = $\pi$ D/N, t is a wall thickness of the target shell component, D is a pipeline diameter of the target shell component;

calculating a circumferential equivalent density factor fac according to a number of segments of the target shell component divided in the circumferential direction, by a formula: fac = g/g', wherein g' is a length of a foldline corresponding to each of the circular arcs after the target shell component is divided in the circumferential direction, g' = 2D $\times$ sin (180/N); and

calculating a material density w" of the target shell component according to Formula (1):

$$w'' = w' \times fac \qquad (1).$$

Optionally, a node of a pipe-beam element at a connection between the target shell component mesh model and the pipe-beam element is set as a master node, and nodes of the target shell component mesh model corresponding to the master node at the connection between the target shell component mesh model and the pipe-beam element are set as slave nodes,

the finite element calculation module includes a total nodal displacement calculation module, a mesh nodal displacement formation module, a beam element internal force calculation module, and a shell element stress calculation module,

the total nodal displacement calculation module is configured to perform finite element calculation on the hybrid model to obtain a displacement of each node of the hybrid model, including: calculating, at the connection between the target shell component mesh model and the pipe-beam element, only the displacement of the master node;

the mesh nodal displacement formation module is electrically connected to the total nodal displacement calculation module, is configured to calculate the displacements of the respective slave nodes corresponding to the master node based on the displacement of the master node, and is further configured to aggregate the displacements of the respective slave nodes and displacements of other mesh nodes of the target shell component mesh model obtained in the finite element calculation to constitute the mesh nodal displacement of the target shell component mesh model;

the beam element internal force calculation module is electrically connected to the total nodal displacement calculation module, and is configured to calculate the nodal internal forces of the pipe-beam elements based on the nodal displacements of the pipe-beam elements; and

the shell element stress calculation module is electrically connected to the mesh nodal displacement formation module, and is configured to calculate the stresses of the respective shell elements based on the mesh nodal displacement of the target shell component mesh model.

Optionally, the finite element calculation module further includes a determination module, which is electrically connected between the interface module and the mesh nodal displacement formation module, and is configured to determine whether a working condition is a non-temperature working condition or a temperature working condition;

if the working condition is determined to be a non-temperature working condition, the mesh nodal displacement formation module is triggered to calculate the displacements of the respective slave nodes corresponding to the master node based on the displacement of the master node using Formula (2):

$$d' = d \times a \qquad (2)$$

wherein d is the displacement of the master node, d' is the displacements of the slave nodes corresponding to the master node, and a is a transformation matrix for transforming the displacement of the master node to the displacements of the slave nodes;

if the working condition is determined to be a temperature working condition, the mesh nodal displacement formation module is triggered to calculate the displacements of the respective slave nodes corresponding to the master node based on the displacement of the master node using Formula (3):

$$d' = d \times (a \times (1 + alf)) \qquad (3)$$

wherein alf is a thermal expansion coefficient of the pipeline material.

Optionally, the mesh nodal displacement formation module includes a shell slave nodal displacement calculation module and a shell nodal displacement summary module,

the shell slave nodal displacement calculation module is electrically connected to the total nodal displacement calculation module, and is configured to calculate the displacements of the respective slave nodes corresponding to the master node based on the displacement of the master node, and

the shell nodal displacement summary module is electrically connected to the shell slave nodal displacement calculation module and the total nodal displacement calculation module, and is configured to aggregate the displacements of the respective slave nodes and the displacements of other mesh nodes of the target shell component mesh model obtained in the finite element calculation to constitute the mesh nodal displacement of the target shell component mesh model.

The present disclosure also provides a mechanics analysis apparatus for pipeline, including the mechanics calculation apparatus described above, and a stress assessment module,

the stress assessment module is electrically connected to the finite element calculation module and the stress calculation module of the mechanics calculation apparatus, and is configured to perform stress assessment on the pipeline according to the stresses of the respective shell elements and the stresses of the respective pipe-beam elements.

In the present disclosure, for the component requiring detailed mechanical analysis, a finite element mesh model is generated (after meshing, each four adjacent nodes form a shell element) to replace a pipe-beam element at a corresponding position in the pipe-beam model, then finite element calculation is performed on a hybrid model thus formed to obtain a solution regarding the displacements of the respective nodes in the hybrid model, and the nodal internal forces of the pipe-beam elements can be calculated based on the nodal displacements of the beam elements in the hybrid model, then the stresses of the pipe-beam elements are calculated, and the stresses of the respective shell elements (namely the stresses) can be calculated based on the mesh nodal displacement of the target shell component mesh model. Therefore, the present disclosure completes the calculation and assessment of the pipe-beam element and the shell component in one pass, without any unnecessary conservative combination processing in the middle, thereby greatly improving the working efficiency of pipeline design. Compared with the methods in which one-dimensional pipe-beam elements are adopted for model calculation, the present disclosure improves the calculation accuracy significantly.

BRIEF DESCRIPTION OF DRAWINGS

FIG. 1 is a flowchart of a mechanics calculation method for pipeline provided by Embodiment 1 of the present disclosure;

FIG. 2 is a diagram illustrating the comparison of a smooth cross section of a pipeline and division foldlines of a shell element;

FIG. 3 is a schematic diagram of a master node and slave nodes at a connection face of the pipe-beam element and the shell element;

FIG. 4 is a block diagram of a mechanics calculation apparatus for pipeline provided by Embodiment 2 of the present disclosure;

FIG. 5 is a diagram of a pipeline model created by a conventional pipeline program;

FIG. 6 is an assessment specification for calculating the stress of the beam;

FIG. 7 is a diagram of a pipeline model with a shell component created by the pipeline program of the present disclosure;

FIG. 8 is a diagram illustrating the result of deformation of the pipeline model of FIG. 7 under the dead-weight condition calculated using the pipeline program of the present disclosure;

FIG. 9 is an assessment specification for calculating the stress of the shell.

DETAIL DESCRIPTION OF EMBODIMENTS

To make those skilled in the art better understand the technical solution of the present disclosure, the present disclosure will be further described in detail below in conjunction with the accompanying drawings and specific embodiments.

Embodiment 1

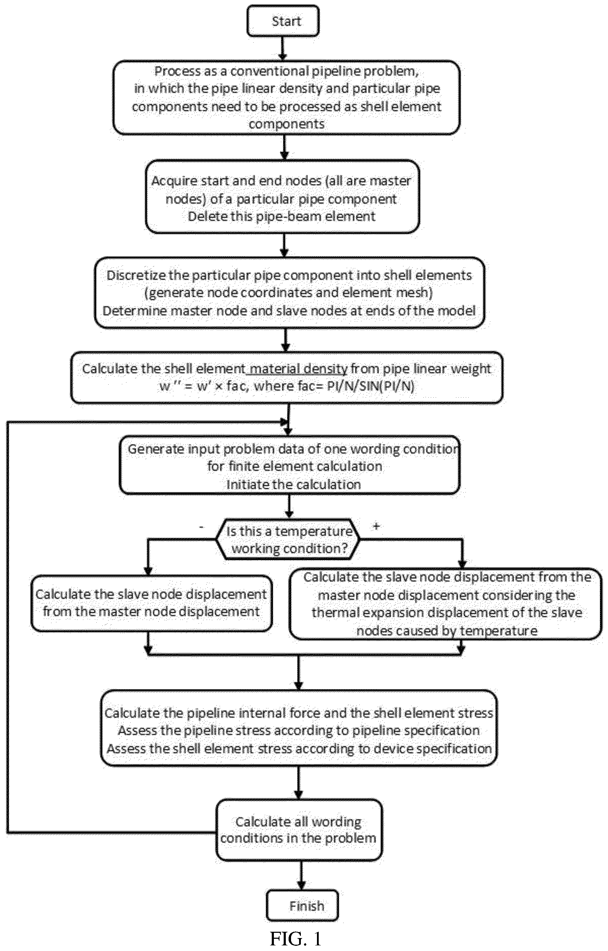

As shown in FIG. 1, this embodiment provides a mechanics calculation method for pipeline, including:

generating, according to parameter information of all components in a pipeline to be calculated, a pipe-beam model formed by connecting a plurality of pipe-beam elements, and node information of the respective pipe-beam elements, wherein the components correspond to the pipe-beam elements in a one-to-one manner;

acquiring start and end node information and meshing information of a target shell component requiring detailed analysis, and generating a target shell component mesh model formed by joining a plurality of shell elements, and mesh node information of the target shell component mesh model;

replacing, with the target shell component mesh model, a pipe-beam element at a corresponding position in the pipe-beam model to form a hybrid model;

performing, according to working condition information of the pipeline to be calculated and the parameter information of the respective components, finite element calculation on the hybrid model to obtain a displacement of each node of the hybrid model; calculating nodal internal forces of the pipe-beam elements based on nodal displacements of the pipe-beam elements; and calculating stresses of the respective shell elements based on mesh nodal displacements of the target shell component mesh model; and

calculating stresses of the pipe-beam elements based on the nodal internal forces of the pipe-beam elements.

In the process of engineering design, no matter it is a nuclear power plant, a thermal power plant or a petrochemical project, there are generally a large number of pipes. The analysis and calculation of the pipeline account for a large proportion of the plant design work. The mechanical analysis and calculation regarding the arrangement of the pipes need to be performed using computer software to testify the reasonability of the design. The technology of the present disclosure is one of a number of processes in a computer program algorithm for pipeline calculation. Most of the existing pipeline programs simulate pipelines using one-dimensional beam elements, including straight pipe-beam elements and curved pipe-beam elements, which are all linear elements. The technology of the present disclosure involves technical means to be adopted for satisfying the requirements of finite element calculation on a hybrid model formed of a pipe beam and a shell element component when converting a linear pipe element into a three-dimensional shell element model.

Specifically, for a component requiring detailed mechanical analysis and calculation (i.e., the target shell component referred to in the present disclosure) in a pipeline problem, a finite element mesh model is generated (after meshing, each four adjacent nodes are sequentially connected end to end to form a shell element) to replace a pipe-beam element at a corresponding position in the pipe-beam model, then finite element calculation is carried out on the hybrid model thus formed to obtain the solution regarding the displacements of the respective nodes in the hybrid model, then the nodal internal forces of the pipe-beam elements can be calculated based on the nodal displacements of the beam elements in the hybrid model, further the stresses of the pipe-beam elements are calculated, and the stresses of the respective shell elements (namely the stresses) can be calculated based on the mesh nodal displacement of the target shell component mesh model. Therefore, the present disclosure completes the calculation and assessment of the pipe-beam element and the shell component in one pass, without any unnecessary conservative combination processing in the middle, thereby greatly improving the working efficiency of pipeline design. Compared with the methods in which one-dimensional pipe-beam elements are adopted for model calculation, the present disclosure improves the calculation accuracy significantly.

To address the defects prevailing in the existing pipeline programs, the present disclosure provides the mechanics calculation method for pipeline described above. By adding simple input requirements into the data of the original pipeline calculation problem, the pipeline program automatically converts a one-dimensional pipe-beam element (Note: although being referred to herein as one-dimensional linear element, it actually describes a pipeline cylinder having a diameter, and the pipeline is exactly the side surface of the cylinder) into a three-dimensional shell element model. The original beam element has only two or several nodes, but after the conversion there may be hundreds of or thousands of nodes, with every four adjacent nodes being sequentially connected end to end to form one shell element, and a plurality of shell elements being joined to form a three-dimensional shell element model. Herein the process of discretizing a smooth cylindrical pipeline into a finite number of three-dimensional shell elements is a pre-processing meshing technology of a finite element program, which is a known technology in the art. The end of the beam element is a node, while the end of the shell element is a plane composed of a plurality of nodes, and the technique of associating one node with a plane composed of a plurality of nodes is also a known technique in the art. The present disclosure integrates these technologies into a modeling module of a pipeline calculation program, and the model automatically created by such method can automatically calculate the pipe-beam element and the shell element simultaneously in the pipeline calculation process. To achieve this function, the structure of the program needs to meet the functional requirements of various elements, and here to also meet the various requirements for pipeline and shell element calculations. Provided herein are a pipe beam processing and a method for connecting the pipe beam and the shell component, and also a precise method for mass density conversion when converting components in the pipeline into shell elements.

In this embodiment, before performing, according to the working condition information of the pipeline to be calculated and the parameter information of the respective components, finite element calculation on the hybrid model, the method includes:

acquiring the working condition information of the pipeline to be calculated and the parameter information of the respective components; determining a material density of the target shell component according to a linear density of the target shell component; and replacing the linear density in the parameter information of the target shell component with the material density of the target shell component, so as to form updated parameter information of the target shell component.

In this embodiment, determining the material density of the target shell component according to the linear density of the target shell component specifically includes:

determining a raw material density w' of the target shell component according to a linear density w of the target shell component by a formula: w' = w/g/t, where the target shell component is divided in a circumferential direction such that an end face circle of the target shell component forms N segments of circular arcs, g is a length of each of the circular arcs, g = πD/N, t is a wall thickness of the target shell component, and D is a pipeline diameter of the target shell component;

calculating a circumferential equivalent density factor fac according to a number of segments of the target shell component divided in the circumferential direction by a formula: fac = g/g', where g' is a length of a foldline corresponding to each of the circular arcs after the target shell component is divided in the circumferential direction, g' = 2D × sin (180/N); and

calculating a material density w" of the target shell component according to Formula (1):

$$w'' = w' \times \text{fac} \qquad (1).$$

When converting the pipeline into shell elements, the material density of the target shell component needs to be determined. As for the pipeline model, all programs on the market require a linear density of the pipe to be given, including the weight of the pipeline material, typically steel, the weight of the working medium, and the weight of the thermal insulation material. As for the calculation on the shell element, the difference is that what needs to be given is the material density of the target shell component. When performing weight calculation, the program generally multiplies the area of the shell by the thickness and then by the material density to obtain the weight of the shell element.

When calculating the material density of the target shell component from the linear weight provided by the pipeline, a general algorithm is to divide the linear density of a unit length by the pipe circumference and the pipe thickness as the material density of the target shell component. The problem of doing so is that the result is not accurate enough; especially when the number of division segments is not large, a large error would occur. Therefore, the applicant proposes in the present disclosure the following solution:

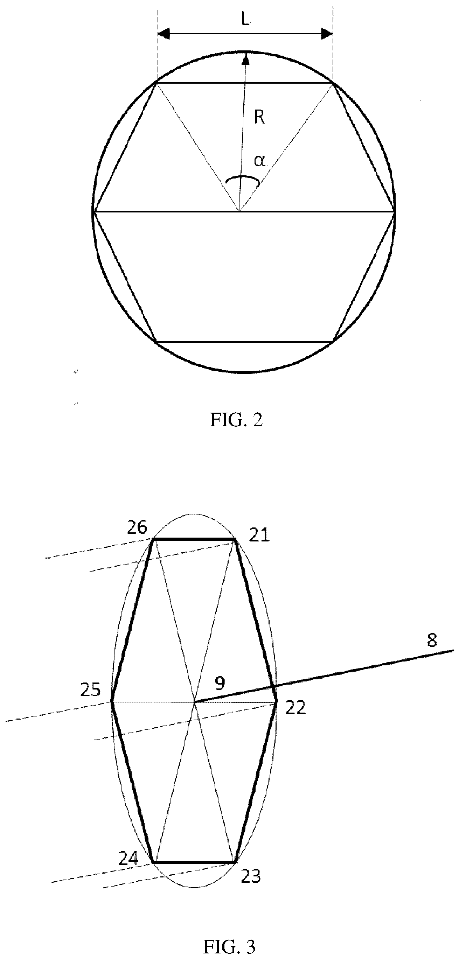

The cross section of the pipe is as shown in FIG. 2, in which the circle is a schematic view of a mid-surface of the pipeline. Here the wall thickness of the pipe is omitted, and the radius of the mid-surface is R. The pattern of the pipe being is divided into six segments in the circumferential direction. The length L is the length of one side of the (hexagon) shell element, that is, the length of a foldline after division.

If a round pipe is divided into six segments in the circumferential direction, 360/6=60, thus α=60 degrees for one segment. As can be seen from the figure, the length g' of a foldline is smaller than the length g of a corresponding arc of an actual pipe, where the arc length g = 2 × R × π × 60/360 = R × π/3. The foldline length g' = R × sin (30) × 2 = R. The ratio of the arc length to the foldline length is π/3 = 1.047198. When applied to a pipe that is divided into any number of segments in the circumferential direction, the algorithm for converting the pipeline material density from a given pipe linear density w is as follows:

the density of the arc segment is: w' = w/g/t, where the w here is the given pipe linear density, and t is the pipe wall thickness;

the length of the arc segment is: g = D × π/N, where D is the pipe diameter, N is the number of segments, π = 3.1415926;

the length of the corresponding foldline segment is: g' = (D/2 × sin (2 × π/N/2)) × 2= D/sin (π/N);

according to the relation between g and g': fac = g/g' = D × π/N/(D/sin (π/N)) = π/N/sin (π/N); and

the shell element density is: w" = w' × fac.

By processing the shell element density in such way, the calculated pipe weight is correct no matter how many segments the pipe is divided in the circumferential direction.

Further, the weight of the shell element component model obtained according to this technology is completely consistent with the weight of the pipe beam, without any calculation discrepancy, which is very important for dynamic analysis. This is because the result of dynamic response of the problem (generally, the response spectrum method is used for analysis) is closely related to the mode shape, while the mode of the pipeline problem is closely related to the mass distribution of the model.

In this embodiment, a node of a pipe-beam element at a connection between the target shell component mesh model and the pipe-beam element is set as a master node, and nodes of the target shell component mesh model corresponding to the master node at the connection between the target shell component mesh model and the pipe-beam element are set as slave nodes,

performing finite element calculation on the hybrid model to obtain the displacement of each node of the hybrid model includes: calculating, at the connection between the target shell component mesh model and the pipe-beam element, only the displacement of the master node;
calculating stresses of the respective shell elements based on mesh nodal displacements of the target shell component mesh model specifically includes:

calculating displacements of the respective slave nodes corresponding to the master node based on the displacement of the master node; wherein the displacements of the respective slave nodes and displacements of other mesh nodes of the target shell component mesh model obtained in the finite element calculation constitute the mesh nodal displacement of the target shell component mesh model; and
calculating the stresses of the respective shell elements based on the mesh nodal displacement of the target shell component mesh model.

When creating a pipeline model, if one segment of the pipeline needs to be processed as a shell element component, processing needs to be performed on the connections between this section of pipeline and the pipeline sections connected to both ends of this section of pipeline. It is assumed that the cross section at any position of the pipeline is always a plane and this plane is rigid, which is a basic assumption when calculating a pipeline problem based on pipe-beam elements. Therefore, there is only a location for one node (set as node n) at the end point of a one-dimensional pipeline segment, what connected to it is modified into a shell element component where there is no node, but there are a ring of nodes along the outer diameter of the pipeline at this position, which ring of nodes are not independent, and the displacements of these nodes are completely determined by the node n. For example, FIG. 3 shows the case of the connection between the pipe beam and the shell element, where the nodes 8 and 9 constitute a pipe-beam element, which is a one-dimensional linear element. The numerals 21 to 26 denote a ring of nodes on the peripheral edge of the shell element. The solutions regarding the displacements of these nodes are not lying in the displacement unknowns in the structural equation of the finite element model, but are indirectly obtained from the displacement of the node 9. A general solution process usually terminates at this step. But the result is not complete enough for a temperature load, as the thermal expansion effect of the rigid plane is missing. The influence of thermal expansion may be taken into account when calculating the displacements of the slave nodes. Since each slave node would be affected by thermal expansion, the corresponding length R is changed accordingly.

In this embodiment, before calculating the displacements of the respective slave nodes corresponding to the master node based on the displacement of the master node, the method further includes: determining whether a working condition is a non-temperature working condition or a temperature working condition;

if the working condition is determined to be a non-temperature working condition, calculating the displacements of the respective slave nodes corresponding to the master node based on the displacement of the master node using Formula (2):

$$d' = d \times a \qquad (2)$$

where d is the displacement of the master node, d' is the displacements of the slave nodes corresponding to the master node, and a is a transformation matrix for transforming the displacement of the master node to the displacements of the slave nodes;
if the working condition is determined to be a temperature working condition, calculating the displacements of the respective slave nodes corresponding to the master node based on the displacement of the master node using Formula (3):

$$d' = d \times (a \times (1+ \mathrm{alf})) \qquad (3)$$

where alf is a thermal expansion coefficient of a pipeline material.

The master node and the slave nodes of the master node mentioned above form a rigid plane. Since this rigid plane does not deform, the above result is correct for normal load solutions, but is problematic for temperature loads. For a pipe-beam model, the circumferential thermal expansion of the pipeline cannot be obtained if only the thermal expansion along the axial direction is considered during the program calculation, whereas for a shell element component, after a temperature load is applied, not only the thermal expansion displacement in the axial direction but also the thermal expansion displacement in the circumferential direction can be obtained for the shell element component part. At this time, an unreal result will occur at the connection between the pipe-beam element and the shell element component due to the rigid plane. For this reason, the influence of the thermal displacements of the respective slave nodes needs to be considered. In a case where the temperature effect is not considered, the value of the displacement of the slave nodes is equal to the value of the displacement of the master node transferred to a corresponding position: d' = d × a, when the thermal expansion displacement needs to be considered: d' = d × (a × (1+ alf)), where alf is the thermal expansion coefficient of the material.

The existing pipeline calculation and analysis software cannot directly put a pipeline element and a pipeline component described by the shell element component together for analysis and calculation. The pipeline calculation needs to be carried out according to various calculation working conditions, such as a dead-weight working condition, a temperature working condition, and an earthquake working condition. Different working conditions have different operational condition levels as well as different assessment criteria, which are reflected in different specification formulas. In pipeline assessment, many coefficients are used in the formulas, and the bending moment of the pipe beam obtained from pipeline calculation is directly substituted into a specification formula, hence the pipe-beam element does not need to directly obtain the actual stress. The limit value required by the specification assessment is the allowable stress. The program needs to perform corresponding calculation considering various factors such as the welding, the component type, the loading cycles and the like. Regarding the influence of these conditions, some are considered based on the factors specified by the specification, such as the weld seam factor, which is related to the welding process and the connecting components. Some conservative factors are present here, which are inevitable when using pipe beams for calculation.

As for a device made of shell elements, what is assessed is stress. The stress, however, is classified into membrane stress, bending stress, membrane and bending stress, and the like, which is related not only to the nature of the load but also to the assessment position. The pipeline calculation program realized by adopting the technology of the present disclosure can complete the calculation of the pipeline and the device components in one pass with convenience. The weight of the shell element component model obtained according to this technology is completely consistent with the weight of the pipe beam without any calculation discrepancy, which is very important for dynamic analysis, this is because the result of dynamic response for the problem (generally, using the response spectrum method for analysis) is closely related to the mode shape, while the mode of the pipeline problem is closely related to the mass distribution of the model. Another technical step involves the technology to connect the pipeline element and the shell element, which adopts the master-slave node technology, where the node at an end of the pipeline element is a master node, and the nodes on the shell model associated with the master node are slave nodes. This technology can ensure that these nodes, including the master node and the slave nodes on the plane, form a rigid plane to meet the requirements for calculation of the whole problem. The shell element model created using this technology can ensure that the weight of the model is completely consistent with the weight of the pipeline model. The requirements for pipeline assessment can naturally be met, while the element stress including the membrane stress and the bending stress can be directly obtained for the shell element. The effect of the software developed by these two technologies is that the local result is more real than that obtained by conventional software, and the calculation and assessment of the pipeline and the device component can be completed in one pass. Since the method to use the program is quite simple, the working efficiency is greatly improved. In the meantime, the conservatism in the design is greatly removed, so that the design and construction of the pipeline are more economical, and the construction cost of the whole engineering project can be reduced.

The specific implementation of the method of the present disclosure is embodied in the computer software flow. The implementation process described below refers to the implementation process of any pipeline calculation program according to the method of the present disclosure. Here, the implementation process does not comprise the technology of discretizing the side surface of the cylinder (i.e., the pipeline) into corresponding nodes and elements, and does not comprise the solution algorithms for various elements in the finite element method or the solution algorithms for the master node and the slave nodes, which are all essential functions of a finite element method software and can be found in a large amount of general-purpose software on the market. The implementation here refers to the technical operation steps to be carried out by the pipeline calculation software for achieving direct shell element calculation for partial components in a pipeline calculation problem.

1) First, a conventional pipeline calculation is carried out, in which a pipe-beam model composed of a plurality of pipe-beam elements is generated according to a pipeline problem to be calculated, which step is a conventional pipeline calculation step and is irrelevant to the gist of the present disclosure. However, it is a prerequisite for the technology of the present disclosure. The rule regarding how to divide the shell element needs to be defined, for example, how many segments are to be divided in the circumferential direction or axial direction, or only the side length of the divided shell element needs to be given directly.

2) When it is required that a certain beam element is to be calculated as a shell component, the software needs to determine the node numbers and the coordinate values of the nodes at the original start and end points of the beam element, and various information such as the diameter, material, temperature, pressure and the like of the beam element. The next step is to create a model file for finite element solution, in which various information of the shell element is included and the corresponding pipe-beam element needs to be cancelled.

3) As for the coordinates of the start and end points and the number of segments divided in the axial direction and the circumferential direction in the second step, shell element mesh node coordinates and element number groups are generated between the coordinates to describe the shell component here. The shell component has a ring of nodes at both ends of the shell component, which nodes are slave nodes that are subordinate to the nodes at the start and end points of the original pipeline in step 2). The purpose of doing so is to ensure that the plane formed by the master-slave node group can represent that the cross section of the pipeline is a rigid plane that will not deform.

4) In a conventional pipeline description document, the linear density of a pipeline is always defined when defining the cross section of the pipeline, and the general dimension is mass per unit length, e.g. kilogram per meter. The material density of the target shell component is required in the shell element calculation, and the principle to be ensured in this model conversion process is that the weight of the component converted into shell elements is consistent with the weight of the pipeline element as originally input. The original pipeline weight W = pipeline length × pipeline weight. As for the shell model of this pipeline, theoretically, the sum of the surface area of the shells should be equal to the area of the cylindrical side-surface of the pipeline element. Then, the material density of the target shell component q = W/shell element area/pipeline wall thickness.

5) A finite element file for finite calculation is prepared, the finite element calculation is initiated for each calculation working condition, and a finite element equation set is solved by a program.

6) For a problem having a master node and slave nodes, the displacement value of the slave nodes needs to be obtained from the displacement of the master node, and such operation is carried out only on the result for a non-temperature working condition.

7) For the displacements of the slave nodes under a temperature working condition, the influence of the thermal expansion coefficient under a corresponding temperature needs to be considered to obtain the displacements of the slave nodes.

8) The stress calculations for the pipeline element and the shell element are completed simultaneously, and the stress assessment is individually performed according to the piping specification and device specification in one pass.

According to the above Sep 4), the theoretical value of the material density of the target shell component can be obtained. In fact, however, each shell element is a flat plane, which is different from a curved plane of the cylindrical surface of a pipeline. Therefore, the theoretical density of the pipeline surface can be calculated by: $w' = w/(D \times \pi)/t$, considering that the curved surface is replaced by a planar surface in the shell element, $w'' = w' \times fac$, where $fac = \pi/N/\pi$ $(\pi/N)$. The reason for multiplication by the factor fac here is that the surface area is reduced due to the conversion into the shell component, thus the pipeline density needs to be scaled up.

In step 7), the influence of the thermal expansion coefficient needs to be considered in calculating the displacements of the slave nodes. $d' = d \times (a \times (1+ alf))$, where d is the calculated displacement of the master node, a is the transformation matrix for transforming the displacement of the master node to the displacements of the slave nodes, and alf is the thermal expansion coefficient of the material.

Embodiment 2

This embodiment provides a mechanics analysis method for pipeline, including the following steps:

performing calculation using the mechanics calculation method for pipeline of Embodiment 1 to obtain the stresses of the respective shell elements and the stresses of the respective pipe-beam elements, and
performing stress assessment on the pipeline according to the stresses of the respective shell elements and the stresses of the respective pipe-beam elements.

Embodiment 3

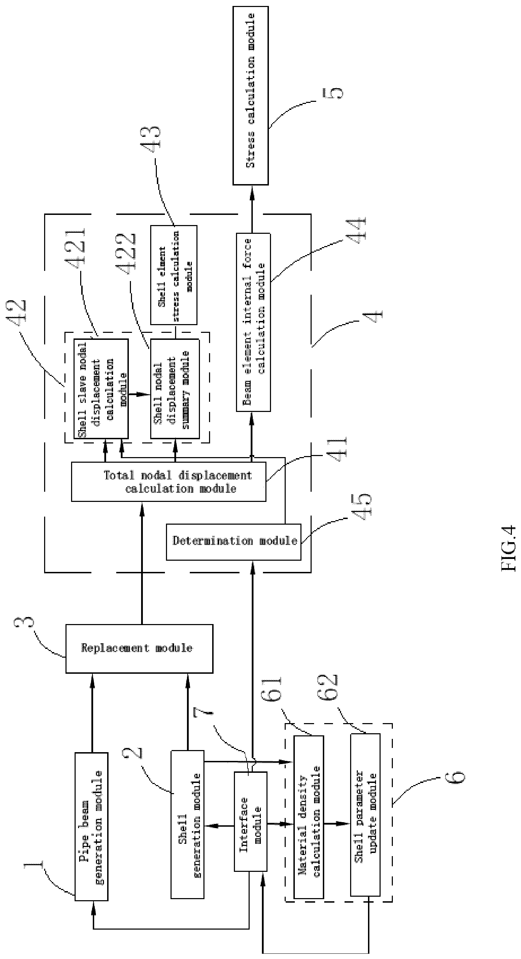

As shown in FIG. 4, this embodiment provides a mechanics calculation apparatus for pipeline for implementing the method of Embodiment 1, the mechanics calculation apparatus including:

a pipe-beam generation module 1 configured to generate, according to parameter information of all components in a pipeline to be calculated, a pipe-beam model formed by connecting a plurality of pipe-beam elements, and node information of the respective pipe-beam elements, where the components correspond to the pipe-beam elements in a one-to-one manner;

a shell generation module 2 configured to acquire start and end node information and meshing information of a target shell component requiring detailed analysis, and generate a target shell component mesh model formed by joining a plurality of shell elements, and mesh node information of the target shell component mesh model;

a replacement module 3 configured to replace, with the target shell component mesh model, a pipe-beam element at a corresponding position in the pipe-beam model to form a hybrid model;

a finite element calculation module 4 configured to perform, according to the working condition information of the pipeline to be calculated and the parameter information of the respective components, finite element calculation on the hybrid model to obtain a displacement of each node of the hybrid model; calculate nodal internal forces of the pipe-beam elements based on nodal displacements of the pipe-beam elements; and calculate stresses of the respective shell elements based on mesh nodal displacements of the target shell element mesh model; and

a stress calculation module 5 configured to calculate stresses of the pipe-beam elements based on the nodal internal forces of the pipe-beam elements.

In this embodiment, the mechanics calculation apparatus further includes an interface module 7, and the interface module 7 is configured to receive the working condition information of the pipeline to be calculated and the parameter information of the respective components, and transmit the working condition information of the pipeline to be calculated and the parameter information of the respective components to the pipe-beam generation module 1 and the finite element calculation module 4, and

the interface module 7 is further configured to receive serial number information and the meshing information of the target shell component and transmit the serial number information and the meshing information of the target shell component to the shell generation module 2.

In this embodiment, the mechanics calculation apparatus further includes a shell parameter formation module 6. The shell parameter formation module 6 is electrically connected to the interface module 7, and is configured to determine a material density of the target shell component according to a linear density of the target shell component, and replace the linear density in the parameter information of the target shell component with the material density of the target shell component, so as to form updated parameter information of the target shell component.

In this embodiment, the shell parameter formation module 6 includes a material density calculation module 61 and a shell parameter update module 62. The material density calculation module 61 is electrically connected to the interface module 7, and is configured to determine the material density of the target shell component according to the linear density of the target shell component. The shell parameter update module 62 is electrically connected to the interface module 7 and the material density calculation module 61, and is configured to replace the linear density in the parameter information of the target shell component with the material density of the target shell component, so as to form updated parameter information of the target shell component.

The material density calculation module 61 determining the material density of the target shell component according to the linear density of the target shell component specifically includes:

determining a raw material density w' of the target shell component according to a linear density w of the target shell component, by a formula: w' = w/g/t, where the target shell component is divided in the circumferential direction such that an end face circle of the target shell component forms N segments of circular arcs, g is a length of each of the circular arcs, g = $\pi$ D/N, t is a wall thickness of the target shell component, D is a pipeline diameter of the target shell component;

calculating a circumferential equivalent density factor fac according to a number of segments of the target shell component divided in the circumferential direction, by a formula: fac = g/g', where g' is a length of a foldline corresponding to each of the circular arcs after the target shell component is divided in the circumferential direction, g' = 2D $\times$ sin (180/N); and

calculating a material density w" of the target shell component according to the following formula:

$$w'' = w' \times \mathrm{fac}.$$

In this embodiment, a node of the pipe-beam element at a connection between the target shell component mesh model and the pipe-beam element is set as a master node, and nodes of the target shell component mesh model corresponding to the master node at the connection between the target shell component mesh model and the pipe-beam element are set as slave nodes;

the finite element calculation module 4 includes a total nodal displacement calculation module 41, a mesh nodal displacement formation module 42, a beam element internal force calculation module 44, and a shell element stress calculation module 43;

the total nodal displacement calculation module 41 is configured to perform finite element calculation on the hybrid model to obtain a displacement of each node of the hybrid model, including: the total nodal displacement calculation module 41 calculates, at the connection between the target shell component mesh model and the pipe-beam element, only the displacement of the master node;

the mesh nodal displacement formation module 42 is electrically connected to the total nodal displacement calculation module 41, and is configured to calculate displacements of the respective slave nodes corresponding to the master node based on the displacement of the master node, and is further configured to aggregate the displacements of the respective slave nodes and displacements of other mesh nodes of the target shell component mesh model obtained in the finite element calculation to constitute the mesh nodal displacement of the target shell component mesh model;

the beam element internal force calculation module 44 is electrically connected to the total nodal displacement calculation module 41, and is configured to calculate the nodal internal forces of the pipe-beam elements based on the nodal displacements of the pipe-beam elements;

the shell element stress calculation module 43 is electrically connected to the mesh nodal displacement formation module 42, and is configured to calculate stresses of the respective shell elements based on the mesh nodal displacement of the target shell component mesh model.

The mesh nodal displacement formation module 42 includes a shell slave nodal displacement calculation module 421 and a shell nodal displacement summary module 422; the shell slave nodal displacement calculation module 421 is electrically connected to the total nodal displacement calculation module 41, and is configured to calculate displacements of the respective slave nodes corresponding to the master node based on the displacement of the master node; the shell nodal displacement summary module 422 is electrically connected to the shell slave nodal displacement calculation module 421 and the total nodal displacement calculation module 41, and is configured to aggregate the displacements of the respective slave nodes and the displacements of other mesh nodes of the target shell component mesh model obtained in the finite element calculation to constitute the mesh nodal displacement of the target shell component mesh model.

In this embodiment, the finite element calculation module 4 further includes a determination module 45, which is electrically connected between the interface module 7 and the shell slave nodal displacement calculation module 421, and is configured to determine whether a working condition is a non-temperature working condition or a temperature working condition;

if the working condition is determined to be a non-temperature working condition, the shell slave nodal displacement calculation module 421 is triggered to calculate the displacements of the respective slave nodes corresponding to the master node based on the displacement of the master node using the following formula:

$$\mathrm{d}' = \mathrm{d} \times \mathrm{a}$$

where d is the displacement of the master node, d' is the displacements of the slave nodes corresponding to the master node, and a is a transformation matrix for transforming the displacement of the master node to the displacements of the slave nodes;

if the working condition is determined to be a temperature working condition, the slave nodal displacement calculation module 421 is triggered to calculate the displacements of the respective slave nodes corresponding to the master node based on the displacement of the master node using the following formula:

$$\mathrm{d}' = \mathrm{d} \times (\mathrm{a} \times (1 + \mathrm{alf}))$$

where alf is the thermal expansion coefficient of the pipeline material.

Embodiment 4

This embodiment provides a mechanics analysis apparatus for pipeline, the mechanics analysis apparatus including the mechanics calculation apparatus of Embodiment 3, and a stress assessment module;

the stress assessment module is electrically connected to the finite element calculation module and the stress calculation module of the mechanics calculation apparatus, and is configured to perform stress assessment on the pipeline according to the stresses of the respective shell elements and the stresses of the respective pipe-beam elements.

Application Example

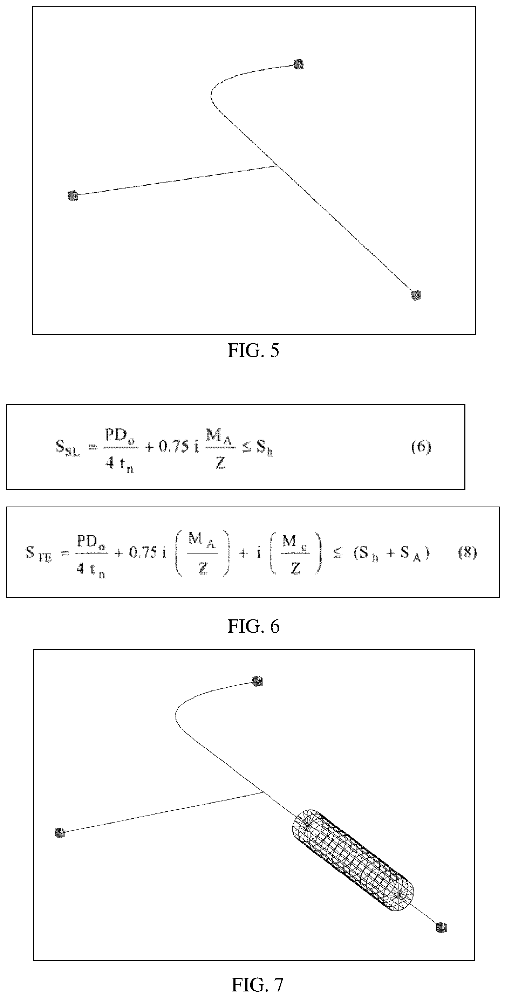

For an actual engineering pipeline problem, if the original pipeline is as shown in FIG. 5, a lot of software applications on the market can perform such calculation. First, the pipeline internal torque M is calculated and obtained, then the result is substituted into a standard formula for assessment, and the assessment requirements are as shown in FIG. 6. D and Z in FIG. 6 are respectively the pipeline diameter and bending modulus of the problem, S to the left of "=" in the formula is the calculated stres s, and S to the right of "≤" in the formula is the allowable stress of a material specified by the specification.

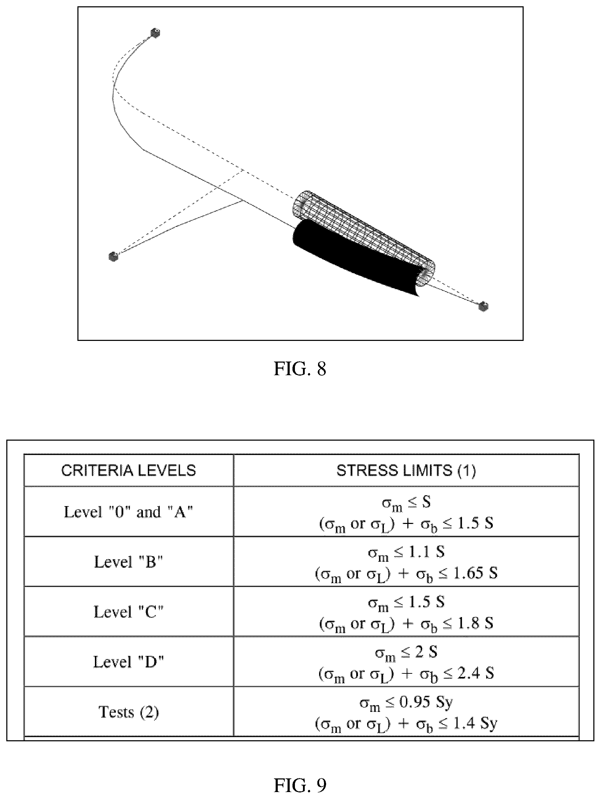

As shown in FIG. 7, a shell element model can be automatically created by using a procedure (i.e., Embodiment 2) corresponding to the method of the present disclosure. Such a problem has a corresponding calculation result, and the deformation under the dead-weight condition is as shown in FIG. 8. The assessment of stress calculation for the shell is performed according to an entire membrane, a local membrane, and a bending stress that are classified according to the specification, and the assessment requirements are as shown in FIG. 9.

Therefore, according to the present disclosure, the calculations for the pipe-beam element and the shell element component, including the stress assessment, can be completed in one pass without any unnecessary conservative combination processing in the middle. The benefit of doing so is apparent, i.e., the program can obtain the results of both the pipeline and the shell element component in one pass under various working conditions such as a temperature condition, an earthquake condition, etc. The accuracy of analysis and calculation is improved, the conservatism of design is reduced, and the economy and safety of the engineering project are improved

It should be understood that above embodiments are just examples for illustrating the principle of the present disclosure only, however, the present disclosure is not limited thereto. To a person of ordinary skill in the art, various variations and improvements may be done without departing from the spirit and essence of the present disclosure, and those variations and improvements shall also be regarded as falling into the protection scope of the present disclosure.

**Claims**

1. A mechanics calculation method for pipeline, comprising:

   generating, according to parameter information of all components in a pipeline to be calculated, a pipe-beam model formed by connecting a plurality of pipe-beam elements, and node information of the respective pipe-beam elements, wherein the components correspond to the pipe-beam elements in a one-to-one manner;
   acquiring start and end node information and meshing information of a target shell component requiring detailed analysis, and generating a target shell component mesh model formed by joining a plurality of shell elements, and mesh node information of the target shell component mesh model;
   replacing, with the target shell component mesh model, a pipe-beam element at a corresponding position in the pipe-beam model to form a hybrid model;
   performing, according to working condition information of the pipeline to be calculated and the parameter information of the respective components, finite element calculation on the hybrid model to obtain a displacement of each node of the hybrid model; calculating nodal internal forces of the pipe-beam elements based on nodal displacements of the pipe-beam elements; and calculating stresses of the respective shell elements based on mesh nodal displacements of the target shell component mesh model; and
   calculating stresses of the pipe-beam elements based on the nodal internal forces of the pipe-beam elements.

2. The mechanics calculation method of claim 1, wherein before performing, according to the working condition information of the pipeline to be calculated and the parameter information of the respective components, finite element calculation on the hybrid model, the method comprises:
   acquiring the working condition information of the pipeline to be calculated and the parameter information of the respective components; determining a material density of the target shell component according to a linear density of the target shell component; and replacing the linear density in the parameter information of the target shell component with the material density of the target shell component, so as to form updated parameter information of the target shell component.

3. The mechanics calculation method of claim 2, wherein determining the material density of the target shell component according to the linear density of the target shell component comprises:

   determining a raw material density w' of the target shell component according to a linear density w of the target shell component by a formula: w' = w/g/t, wherein the target shell component is divided in a circumferential direction such that an end face circle of the target shell component forms N segments of circular arcs, g is a length of each of the circular arcs, g = πD/N, t is a wall thickness of the target shell component, and D is a pipeline diameter of the target shell component;

calculating a circumferential equivalent density factor fac according to a number of segments of the target shell component divided in the circumferential direction by a formula: fac = g/g', wherein g' is a length of a foldline corresponding to each of the circular arcs after the target shell component is divided in the circumferential direction, g' = 2D × sin (180/N); and

calculating a material density w" of the target shell component according to Formula (1):

$$w'' = w' \times \text{fac} \qquad (1).$$

4. The mechanics calculation method of any one of claims 1 to 3, further comprising: setting a node of a pipe-beam element at a connection between the target shell component mesh model and the pipe-beam element as a master node, and setting nodes of the target shell component mesh model corresponding to the master node at the connection between the target shell component mesh model and the pipe-beam element as slave nodes;

wherein performing finite element calculation on the hybrid model to obtain the displacement of each node of the hybrid model comprises: calculating, at the connection between the target shell component mesh model and the pipe-beam element, only the displacement of the master node;

calculating the stresses of the respective shell elements based on the mesh nodal displacement of the target shell component mesh model comprises:

calculating displacements of the respective slave nodes corresponding to the master node based on the displacement of the master node;

the displacements of the respective slave nodes and displacements of other mesh nodes of the target shell component mesh model obtained in the finite element calculation constitute the mesh nodal displacement of the target shell component mesh model; and

calculating the stresses of the respective shell elements based on the mesh nodal displacement of the target shell component mesh model.

5. The mechanics calculation method of claim 4, wherein before calculating the displacements of the respective slave nodes corresponding to the master node based on the displacement of the master node, the method further comprises: determining whether a working condition is a non-temperature working condition or a temperature working condition;

if the working condition is determined to be a non-temperature working condition, calculating the displacements of the respective slave nodes corresponding to the master node based on the displacement of the master node using Formula (2):

$$d' = d \times a \qquad (2)$$

wherein d is the displacement of the master node, d' is the displacements of the slave nodes corresponding to the master node, and a is a transformation matrix for transforming the displacement of the master node to the displacements of the slave nodes;

if the working condition is determined to be a temperature working condition, calculating the displacements of the respective slave nodes corresponding to the master node based on the displacement of the master node using Formula (3):

$$d' = d \times (a \times (1 + \text{alf})) \qquad (3)$$

wherein alf is a thermal expansion coefficient of a pipeline material.

6. A mechanics analysis method for pipeline, comprising:

performing calculation using the mechanics calculation method of any one of claims 1 to 5 to obtain the stresses of the respective shell elements and the stresses of the respective pipe-beam elements; and

performing stress assessment on the pipeline according to the stresses of the respective shell elements and the stresses of the respective pipe-beam elements.

7. A mechanics calculation apparatus for pipeline, comprising:

a pipe-beam generation module configured to generate, according to parameter information of all components in a pipeline to be calculated, a pipe-beam model formed by connecting a plurality of pipe-beam elements, and node information of the respective pipe-beam elements, wherein the components correspond to the pipe-beam elements in a one-to-one manner;

a shell generation module configured to acquire start and end node information and meshing information of a target shell component requiring detailed analysis, and generate a target shell component mesh model formed by joining a plurality of shell elements, and mesh node information of the target shell component mesh model;

a replacement module configured to replace, with the target shell component mesh model, a pipe-beam element at a corresponding position in the pipe-beam model to form a hybrid model;

a finite element calculation module configured to perform, according to working condition information of the pipeline to be calculated and the parameter information of the respective components, finite element calculation on the hybrid model to obtain a displacement of each node of the hybrid model; calculate nodal internal forces of the pipe-beam elements based on nodal displacements of the pipe-beam elements; and calculate stresses of the respective shell elements based on mesh nodal displacements of the target shell element mesh model; and

a stress calculation module configured to calculate stresses of the pipe-beam elements based on the nodal internal forces of the pipe-beam elements.

8. The mechanics calculation apparatus of claim 7, further comprising: an interface module configured to receive the working condition information of the pipeline to be calculated and the parameter information of the respective components, and transmit the working condition information of the pipeline to be calculated and the parameter information of the respective components to the pipe-beam generation module and the finite element calculation module, and

the interface module is further configured to receive serial number information and the meshing information of the target shell component, and transmit the serial number information and the meshing information of the target shell component to the shell generation module.

9. The mechanics calculation apparatus of claim 8, further comprising: a shell parameter formation module, which is electrically connected to the interface module, and is configured to determine a material density of the target shell component according to a linear density of the target shell component, and replace the linear density in the parameter information of the target shell component with the material density of the target shell component, so as to form updated parameter information of the target shell component.

10. The mechanics calculation apparatus of claim 9, wherein the shell parameter formation module comprises a material density calculation module and a shell parameter update module, wherein the material density calculation module is electrically connected to the interface module, and is configured to determine the material density of the target shell component according to the linear density of the target shell component, and the shell parameter update module is electrically connected to the material density calculation module, and is configured to replace the linear density in the parameter information of the target shell component with the material density of the target shell component, so as to form updated parameter information of the target shell component;

the material density calculation module determining the material density of the target shell component according to the linear density of the target shell component comprises:

determining a raw material density w' of the target shell component according to a linear density w of the target shell component, by a formula: w' = w/g/t, wherein the target shell component is divided in a circumferential direction such that an end face circle of the target shell component forms N segments of circular arcs, g is a length of each of the circular arcs, g = $\pi$ D/N, t is a wall thickness of the target shell component, D is a pipeline diameter of the target shell component;

calculating a circumferential equivalent density factor fac according to a number of segments of the target shell component divided in the circumferential direction, by a formula: fac = g/g', wherein g' is a length of a foldline corresponding to each of the circular arcs after the target shell component is divided in the circumferential direction, g' = 2D $\times$ sin (180/N); and

calculating a material density w" of the target shell component according to Formula (1):

$$w'' = w' \times \mathrm{fac} \qquad (1).$$

**11.** The mechanics calculation apparatus of any one of claims 7-10, wherein,

a node of a pipe-beam element at a connection between the target shell component mesh model and the pipe-beam element is set as a master node, and nodes of the target shell component mesh model corresponding to the master node at the connection between the target shell component mesh model and the pipe-beam element are set as slave nodes,

the finite element calculation module comprises a total nodal displacement calculation module, a mesh nodal displacement formation module, a beam element internal force calculation module, and a shell element stress calculation module,

the total nodal displacement calculation module is configured to perform finite element calculation on the hybrid model to obtain a displacement of each node of the hybrid model, comprising: calculating, at the connection between the target shell component mesh model and the pipe-beam element, only the displacement of the master node,

the mesh nodal displacement formation module is electrically connected to the total nodal displacement calculation module, and is configured to calculate the displacements of the respective slave nodes corresponding to the master node based on the displacement of the master node, and is further configured to aggregate the displacements of the respective slave nodes and displacements of other mesh nodes of the target shell component mesh model obtained in the finite element calculation to constitute the mesh nodal displacement of the target shell component mesh model,

the beam element internal force calculation module is electrically connected to the total nodal displacement calculation module, and is configured to calculate the nodal internal forces of the pipe-beam elements based on the nodal displacements of the pipe-beam elements, and

the shell element stress calculation module is electrically connected to the mesh nodal displacement formation module, and is configured to calculate the stresses of the respective shell elements based on the mesh nodal displacement of the target shell component mesh model.

**12.** The mechanics calculation apparatus of claim 11, wherein the finite element calculation module further comprises a determination module, which is electrically connected between the interface module and the mesh nodal displacement formation module, and is configured to determine whether a working condition is a non-temperature working condition or a temperature working condition;

if the working condition is determined to be a non-temperature working condition, the mesh nodal displacement formation module is triggered to calculate the displacements of the respective slave nodes corresponding to the master node based on the displacement of the master node using Formula (2):

$$d' = d \times a \qquad (2)$$

wherein d is the displacement of the master node, d' is the displacements of the slave nodes corresponding to the master node, and a is a transformation matrix for transforming the displacement of the master node to the displacements of the slave nodes;

if the working condition is determined to be a temperature working condition, the mesh nodal displacement formation module is triggered to calculate the displacements of the respective slave nodes corresponding to the master node based on the displacement of the master node using Formula (3):

$$d' = d \times (a \times (1 + \mathrm{alf})) \qquad (3)$$

wherein alf is a thermal expansion coefficient of the pipeline material.

**13.** The mechanics calculation apparatus of claim 11, wherein the mesh nodal displacement formation module comprises a shell slave nodal displacement calculation module and a shell nodal displacement summary module,

wherein the shell slave nodal displacement calculation module is electrically connected to the total nodal displacement calculation module, and is configured to calculate the displacements of the respective slave nodes corresponding to the master node based on the displacement of the master node, and

the shell nodal displacement summary module is electrically connected to the shell slave nodal displacement calculation module and the total nodal displacement calculation module, and is configured to aggregate the displacements of the respective slave nodes and the displacements of other mesh nodes of the target shell component mesh model obtained in the finite element calculation to constitute the mesh nodal displacement of the target shell component mesh model.

14. A mechanics analysis apparatus for pipeline, comprising: the mechanics calculation apparatus of any one of claims 7 to 13, and a stress assessment module,
wherein the stress assessment module is electrically connected to the finite element calculation module and the stress calculation module of the mechanics calculation apparatus, and is configured to perform stress assessment on the pipeline according to the stresses of the respective shell elements and the stresses of the respective pipe-beam elements.

```
                          ┌─────────┐
                          │  Start  │
                          └────┬────┘
                               │
      ┌────────────────────────▼─────────────────────────┐
      │      Process as a conventional pipeline problem,  │
      │   in which the pipe linear density and particular │
      │   pipe components need to be processed as shell    │
      │          element components                        │
      └────────────────────────┬─────────────────────────┘
```

Process as a conventional pipeline problem, in which the pipe linear density and particular pipe components need to be processed as shell element components

Acquire start and end nodes (all are master nodes) of a particular pipe component
Delete this pipe-beam element

Discretize the particular pipe component into shell elements (generate node coordinates and element mesh)
Determine master node and slave nodes at ends of the model

Calculate the shell element _material density_ from pipe linear weight
w ″ = w′ × fac, where fac= PI/N/SIN(PI/N)

Generate input problem data of one wording condition for finite element calculation
Initiate the calculation

Is this a temperature working condition?

Calculate the slave node displacement from the master node displacement

Calculate the slave node displacement from the master node displacement considering the thermal expansion displacement of the slave nodes caused by temperature

Calculate the pipeline internal force and the shell element stress
Assess the pipeline stress according to pipeline specification
Assess the shell element stress according to device specification

Calculate all wording conditions in the problem

Finish

FIG. 1

FIG. 2

FIG. 3

FIG.4

FIG. 5

$$S_{SL} = \frac{PD_o}{4\,t_n} + 0.75\,i\,\frac{M_A}{Z} \leq S_h \qquad (6)$$

$$S_{TE} = \frac{PD_o}{4\,t_n} + 0.75\,i\left(\frac{M_A}{Z}\right) + i\left(\frac{M_c}{Z}\right) \leq (S_h + S_A) \qquad (8)$$

FIG. 6

FIG. 7

FIG. 8

| CRITERIA LEVELS | STRESS LIMITS (1) |
|---|---|
| Level "0" and "A" | $\sigma_m \leq S$<br>$(\sigma_m \text{ or } \sigma_L) + \sigma_b \leq 1.5 \, S$ |
| Level "B" | $\sigma_m \leq 1.1 \, S$<br>$(\sigma_m \text{ or } \sigma_L) + \sigma_b \leq 1.65 \, S$ |
| Level "C" | $\sigma_m \leq 1.5 \, S$<br>$(\sigma_m \text{ or } \sigma_L) + \sigma_b \leq 1.8 \, S$ |
| Level "D" | $\sigma_m \leq 2 \, S$<br>$(\sigma_m \text{ or } \sigma_L) + \sigma_b \leq 2.4 \, S$ |
| Tests (2) | $\sigma_m \leq 0.95 \, Sy$<br>$(\sigma_m \text{ or } \sigma_L) + \sigma_b \leq 1.4 \, Sy$ |

FIG. 9

## INTERNATIONAL SEARCH REPORT

| International application No. |
| --- |
| **PCT/CN2022/135729** |

**A.    CLASSIFICATION OF SUBJECT MATTER**

G06F30/23(2020.01)i;  G06F30/18(2020.01)i;  G06F113/14(2020.01)i;  G06F119/14(2020.01)i

According to International Patent Classification (IPC) or to both national classification and IPC

**B.    FIELDS SEARCHED**

Minimum documentation searched (classification system followed by classification symbols)

IPC：G06F

Documentation searched other than minimum documentation to the extent that such documents are included in the fields searched

Electronic data base consulted during the international search (name of data base and, where practicable, search terms used)

CNTXT, ENTXTC, CJFD, DWPI: 中国核电工程有限公司, 刘树斌, 刘诗华, 刘宝君, 陈丽, 刘健, 白国宇, 管道, 管路, 有限元, 网格划分, 梁, 壳, 混合, 结合, 替换, 删除, 替代, 变形, 形变, 位移, 内力, 应力, 线密度, 材料密度, 弧长, 厚度, 主, 从, 加热, 受热, 膨胀, pipe, tube, finite element, shell, beam, mix+, combinat+, replace+, displace+, stress, density, heat+, expand

**C.    DOCUMENTS CONSIDERED TO BE RELEVANT**

| Category* | Citation of document, with indication, where appropriate, of the relevant passages | Relevant to claim No. |
| --- | --- | --- |
| Y | 张士岩 等 (ZHANG, Shiyan et al.). "基于梁-壳混合教学单元的输气管道穿越地震断层模型 (A model of gas pipeline crossing earthquake fault based on beam-shell combined teaching element)" 油气储运 (Oil & Gas Storage and Transportation), Vol. 37, No. 02, 28 February 2018 (2018-02-28), 210-215 sections 1-3 | 1, 2, 6-9, 13, 14 |
| Y | CN 102819632 A (SUZHOU INDUSTRIAL PARK DESIGN & RESEARCH INSTITUTE CO., LTD.) 12 December 2012 (2012-12-12) description, paragraph [0038] | 1, 2, 6-9, 13, 14 |
| A | CN 106383964 A (BEIJING INSTITUTE OF ASTRONAUTICAL SYSTEMS ENGINEERING et al.) 08 February 2017 (2017-02-08) entire document | 1-14 |
| A | CN 106021644 A (NORTHWESTERN POLYTECHNICAL UNIVERSITY) 12 October 2016 (2016-10-12) entire document | 1-14 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 August 2023** | **16 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/135729** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 106055764 A (NORTH CHINA ELECTRIC POWER UNIVERSITY (BAODING)) 26 October 2016 (2016-10-26)<br>        entire document | 1-14 |
| A | CN 111783258 A (JIANGSU JINXIANG TRANSMISSION EQUIPMENT CO., LTD.) 16 October 2020 (2020-10-16)<br>        entire document | 1-14 |
| A | JP 2000331063 A (NEC JOHO SYSTEMS K.K. et al.) 30 November 2000 (2000-11-30)<br>        entire document | 1-14 |
| A | 黄政华 等 (HUANG, Zhenghua et al.). "平面钢管桁架平面外稳定混合有限元分析 (Analysis of Out-of-plane Stability for Planar Tubular Truss with Mixed Finite Elements Method)"<br>土木建筑与环境工程 (*Journal of Civil, Architectural & Environmental Engineering*), Vol. 31, No. 03, 30 June 2009 (2009-06-30),<br>        entire document | 1-14 |

Form PCT/ISA/210 (second sheet) (July 2022)

**INTERNATIONAL SEARCH REPORT**
Information on patent family members

| International application No. |
| --- |
| **PCT/CN2022/135729** |

| Patent document cited in search report | | | Publication date (day/month/year) | Patent family member(s) | | | Publication date (day/month/year) |
| --- | --- | --- | --- | --- | --- | --- | --- |
| CN | 102819632 | A | 12 December 2012 | None | | | |
| CN | 106383964 | A | 08 February 2017 | CN | 106383964 | B | 12 July 2019 |
| CN | 106021644 | A | 12 October 2016 | CN | 106021644 | B | 26 February 2019 |
| CN | 106055764 | A | 26 October 2016 | CN | 106055764 | B | 16 April 2019 |
| CN | 111783258 | A | 16 October 2020 | None | | | |
| JP | 2000331063 | A | 30 November 2000 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211470861